# EUROPÄISCHE PATENTANMELDUNG

(11) **EP 4 582 162 A2**
(43) Veröffentlichungstag der Anmeldung: **09.07.2025**
(21) Anmeldenummer: 25172652.7
(22) Anmeldetag: 27.04.2022
(51) Int. Cl.: B01D 39/16

(54) **FILTERVORRICHTUNG NEBST EINEM DARIN AUFNEHMBAREN FILTERELEMENT UND VERFAHREN ZUM BETRIEB EINES SOLCHEN FILTERELEMENTES NEBST VORRICHTUNG**

(30) Priorität: 20.05.2021 DE 102021002647
(62) Teilanmeldung aus: 22723694.0
(71) Anmelder: HYDAC FluidCareCenter GmbH, 66280 Sulzbach/Saar (DE)
(72) Erfinder: Koch, Edwin, 66636 Tholey (DE); Lang, Timo, 66539 Neunkirchen (DE); Adam, Christian, 66538 Neunkirchen (DE); Müller, Daniel, 66539 Neunkirchen (DE); Noll, Martin, 66386 St. Ingbert (DE); Staudt, Johannes, 66424 Homburg (DE)
(74) Vertreter: Bartels und Partner, Patentanwälte

(57) **Zusammenfassung**

2. Filtervorrichtung mit einem Filtergehäuse (10), das einen Einlass (12) für Unfiltrat und einen Auslass (14) für Filtrat aufweist und das ein tauschbares Filterelement (16) aufnimmt, bei dessen Durchströmung mit Unfiltrat von außen nach innen sowohl ein hohlzylindrisches Elementmaterial (18) als auch ein den Hohlzylinder (18) an seinem einen freien Ende (20) abschließendes Elementmaterial (22) durchströmt ist, an dessen anderem freien Ende (24) eine Elementkappe (26) mit einer Mittenausnehmung (28) dazu dient, Filtrat an den Auslass (14) im Filtergehäuse (10) abzugeben, der an die Mittenausnehmung (28) angeschlossen ist und dass das jeweilige Elementmaterial (18, 22) für eine allseitige Anströmung von außen nach innen abdichtungsfrei im Filtergehäuse (10) aufgenommen ist.

## Beschreibung

Die Erfindung betrifft eine Filtervorrichtung mit einem Filtergehäuse, das einen Einlass für Unfiltrat und einen Auslass für Filtrat aufweist und das ein tauschbares, hohlzylindrisches Filterelement aufnimmt für eine Durchströmung mit Unfiltrat von außen nach innen.

Ein solches als Austauschelement konzipiertes Filterelement ist in WO 2018/082799 A1 aufgezeigt, dessen als Hohlkörper ausgebildetes und sich zwischen zwei Endkappen erstreckendes Elementmaterial, plissiert mit einzelnen Filterfalten, ausgebildet ist, wobei das Elementmaterial ein Filtermaterial aus Zellulose aufweist. Bei der Durchströmung mit dem Fluid wirken die Zellulosefasern koaleszierend, wodurch sich aus dem Wasseranteil der Emulsion vergrößerte Tropfen bilden, die aufgrund des Dichteunterschiedes von Wasser und Öl nach unten absinken, so dass es zu einer Abtrennung von weniger dichtem Medium kommt. Ein dahingehendes Filterelement nimmt in funktionssicherer Weise die angesprochene Wasser-Abtrennung vor und ist darüber hinaus kostengünstig in der Herstellung.

Das bekannte Filterelement lässt sich mittels einer Aufnahmestange als Teil einer Festlegeeinrichtung in einer Vorrichtung mit einem Filtergehäuse festlegen, wobei eine jede Endkappe des Filterelementes über einen Abstandshalter mit Dichtfunktion verfügt, einmal an der Festlegeeinrichtung und einmal an einem Zwischenboden des Filtergehäuses. Dergestalt sind keine über den Außenumfang des Filterelementes überstehende, zusätzliche Haltemittel notwendig, was eine platzsparende Bauweise ermöglicht.

Durch EP 3 334 512 B1 ist eine Ölfiltrationseinheit bekannt zur Entfernung von festen Kontaminanten aus kontaminiertem Öl, umfassend:
- ein Gehäuse, das einen Gehäuseeinlass umfasst, der geeignet ist, kontaminiertes Öl aus der Umgebung aufzunehmen und das kontaminierte Öl an eine innere Öffnung des Gehäuses bei einem ersten Druck p1 abzugeben und ein Gehäuseauslass, der geeignet ist, gefiltertes Öl an die Umgebung abzugeben, und
- ein Ölfilter zum Filtern des kontaminierten Öls, wobei der Ölfilter in der inneren Öffnung des Gehäuses angeordnet ist und einen Filtereinlass umfasst, der durch eine Außenfläche des Ölfilters definiert ist, ein inneres Filtervolumen, das geeignet ist, um gefiltertes Öl bei einem zweiten Druck p2 aufzunehmen, wobei der zweite Druck p2 niedriger als der erste Druck p1 ist, und ein Filterauslass innerhalb des Gehäuses, der eine Fluid/Flüssigkeitsverbindung zwischen dem inneren Filtervolumen und dem Gehäuseauslass bereitstellt, um das gefilterte Öl aus dem inneren Filtervolumen abzulassen,
- wobei eine Endplatte des Ölfilters den Filterauslass umfasst, wobei die gesamte Endplatte ein poröses Material umfasst, durch das Öl fließen kann, so dass zumindest ein Teil der Endplatte einen Teil des Filterauslasses bildet,
- und wobei der Filterauslass einen hydraulischen Widerstand umfasst, der einen Teil des Ölfilters bildet, wobei jener hydraulische Widerstand eine Fluid/Flüssigkeit - Strömungsbegrenzung zwischen dem inneren Filtervolumen und dem Gehäuseauslass bereitstellt, um den zweiten Druck p2 innerhalb des inneren Filtervolumens zu erhöhen und um das gefilterte Öl aus dem inneren Filtervolumen in den Gehäuseauslass bei einem dritten Druck p3 abzulassen, wobei der dritte Druck p3 niedriger ist als der zweite Druck p2.

Der zugehörige Ölfilter respektive das Filterelement ist hohlzylindrisch ausgebildet und besteht insoweit aus Zellulosematerial. Eine scheibenförmige Endplatte des Ölfilters umfasst den Filterauslass des Filtergehäuses, wobei die dahingehende Endplatte ein poröses Material aus natürlichem oder synthetischem Polymer und Zellulosematerial aufweisen kann. Das bekannte Filterelement als Ölfilter wird von innen nach außen durchströmt, wobei durch die genannte Endplatte aus porösem Material ein hydraulischer Widerstand gebildet ist, der insoweit eine Strömungsbegrenzung zwischen dem inneren Filtervolumen und der Umgebung bereitstellt, um dergestalt die bereits genannte Druckabstufung p1 > p2 > p3 zu erreichen. Sinn dieser Druckabstufung ist, dass dergestalt ein Druckstau (back pressure) für das Filterelement vermieden werden soll, der auftritt, wenn beispielsweise ausgangsseitig des Filters eine hydraulische Pumpeneinrichtung oder dergleichen angeschlossen ist.

Neben der Durchströmung von außen nach innen ist es für die Funktion notwendig, dass das Elementmaterial bodenseitig des Filterelementes gegenüber dem aufnehmenden Filtergehäuse mit einer Dichteinrichtung versehen ist, was zum einen die wirksame Filterfläche am Filterelement begrenzt und zum anderen einen gewissen apparatetechnischen Aufwand am Filtergehäuse nach sich zieht.

Ausgehend von diesem Stand der Technik liegt der Erfindung die Aufgabe zugrunde, unter Beibehalten der Vorteile der bekannten Lösungen, nämlich einen funktionssicheren Filtrationsbetrieb zu gewährleisten, dahingehend weiter zu verbessern, dass die Effizienz während der Filtration verbessert ist, bei technisch einfachem Aufbau und in kostengünstiger Weise.

Eine dahingehende Aufgabe löst eine Filtervorrichtung mit den Merkmalen des Patentanspruches 1 in seiner Gesamtheit sowie ein Filterelement gemäß den Merkmalen des unabhängigen Patentanspruches 2 nebst einem Verfahren zum Betrieb eines solchen Filterelementes mit den Merkmalen des unabhängigen Patentanspruches 12.

Dadurch, dass bei der erfindungsgemäßen Filtervorrichtung vorgesehen ist, dass bei Durchströmung des tauschbaren Filterelementes mit Unfiltrat von außen nach innen sowohl ein hohlzylindrisches Elementmaterial als auch ein den Hohlzylinder an seinem einen freien Ende abschließendes Elementmaterial durchströmt ist, an dessen anderem freien Ende eine Elementkappe mit einer Mittenausnehmung dazu dient, Filtrat an den Auslass im Filtergehäuse abzugeben, der an die Mittenausnehmung angeschlossen ist und dass das jeweilige Elementmaterial für eine allseitige Umströmung von außen nach innen abdichtungsfrei im Filtergehäuse aufgenommen ist, kommt es nur zu einer einfachen Druckstufe, bei der der Druck p1 außerhalb des Filterelementes größer ist als der Abgabedruck p2 auf der Innenseite des hohlzylindrischen zu einer Seite hin abgeschlossenen Elementmaterials. Dies führt zu einer wesentlich verbesserten Abreinigungsbilanz für den Unfiltratstrom und erweist sich als energetisch günstig, wozu auch mitbeiträgt, dass das hohlzylindrische Elementmaterial auf seiner Filtratabgabeseite mit einer durchgehenden Abgabeöffnung innerhalb des Filtergehäuses aufgenommen ist, so dass die Durchströmung des Filterelementes dahingehend von der Boden-zur Kopfseite erfolgt. Auch die dahingehend aufsteigende Filtrationsrichtung für den Filtratstrom auf die druckreduzierte Abgabeseite ist von der Energiebilanz her gesehen günstig.

Da das Elementmaterial des Filterelementes als Ganzes von außen nach innen durchströmt ist und demgemäß keine zusätzliche Dichteinrichtung des Filtergehäuses bodenseitig am Elementmaterial angreift, steht die volle Filterfläche für die Filtration zur Verfügung und der apparatetechnische Aufwand ist durch Wegfall einer solchen Dichteinrichtung reduziert.

Das erfindungsgemäße Filterelement für die Filtervorrichtung besteht im Umfang des hohlzylindrischen Elementmaterials als auch für das den Hohlzylinder abschließende Elementmaterial vorzugsweise vollständig aus Zellulosematerial, was insbesondere aufgrund der homogenen Ausbildung des Elementmaterials von Vorteil ist, wenn kleinpartikuläre Verschmutzungen aus einem Fluidstrom abgeschieden werden müssen, was beispielsweise der Fall ist, wenn man sogenannten Ölalterungsprodukte (Varnish) aus einem Fluidstrom absondern möchte. Das erfindungsgemäße Verfahren stellt einen dahingehenden Filtrationsbetrieb mit der vorstehend bezeichneten Vorrichtung nebst Filterelement sicher und aufgrund der nur einfach vorhandenen Druckstufe p1 in Richtung p2 sind Fluidwiderstände reduziert und eine hohe Filtrationsleistung bei Anwendung des erfindungsgemäßen Verfahrens erreicht.

Bei einer besonders bevorzugten Ausführungsform des erfindungsgemäßen Filterelementes ist vorgesehen, dass der Hohlzylinder des Filterelementes aus einzelnen, vorzugsweise gleichen, ringförmigen Filterscheiben gebildet ist, die in Übereinanderanordnung an ihren einander benachbarten Stirnseiten miteinander fest verbunden, vorzugsweise miteinander verklebt sind und dass das den Hohlzylinder an seinem einen Ende abschließende Elementmaterial aus einer geschlossenen Filterscheibe gebildet ist. Dergestalt lässt sich das Filterelement, im Sinne eines Baukastens, in beliebiger Länge durch die gleichen ringförmigen Filterscheiben durchströmt in Übereinanderanordnung aufbauen. Darüber hinaus lassen sich die genannten ringförmigen Filterscheiben als Gleichbauteile in großer Stückzahl in der Art einer Serienfertigung herstellen, was kostengünstig ist.

Bei einer weiteren bevorzugten Ausführungsform des erfindungsgemäßen Filterelementes ist vorgesehen, dass alle Filterscheiben aus Zellulosematerial dieselben Filtereigenschaften aufweisen, insbesondere dieselbe Filterfeinheit und dass die ringförmigen Filterscheiben von ihrem Elementmaterial her, alle gleich aufgebaut sind. Die genannten Filterscheiben aus Zellulose werden in Anlehnung an DIN EN ISO 5269-2 nach dem sogenannten Rapid-Köthen-Verfahren hergestellt und als insoweit standardisiertes Verfahren ist eine hohe Prozesssicherheit bei der Herstellung erreicht.

Bei einer weiteren bevorzugten Ausführungsform des erfindungsgemäßen Filterelementes ist vorgesehen, dass die einzelnen ringförmigen Filterscheiben außenumfangsseitig Ausnehmungen aufweisen, die durch Einschnitte oder durch benachbarte Abstandhalter zwischen den Filterscheiben gebildet sind. Die erhaltenen Ausnehmungen erhöhen zum einen die Stabilität im Blattverbund mit den einzelnen Filterscheiben und erlauben eine Strömungsführung für den Unfiltratstrom, der von außen nach innen das Filterelement mit den Filterscheiben durchströmt. In vorteilhafter Weise kann dabei das scheibenförmige Elementmaterial, das den Hohlzylinder endseitig abschließt, mit einer Zusatzgeometrie versehen sein, vorzugsweise in Form einer Einleiteinrichtung, die in das Innere des Hohlzylinders eingreift. Für eine gezielte Strömungsführung im Inneren des hohlzylindrischen Filterelementes von der Bodenseite her in Richtung zur Kopfseite des Filterelementes, kann die Einleiteinrichtung bevorzugt vom Außenumfang her, eine Trompetenform aufweisen, deren größter Querschnitt einstückig in das Elementmaterial der geschlossenen Filterscheibe übergeht. Da die Einleiteinrichtung auf der Bodenseite des Elementmaterials für die Durchströmung des Filterelementes auch einen gewissen Widerstand darstellt, kommt es zu einer verbesserten Durchströmung im Kopfbereich des Elementes und damit insgesamt zu einer vergleichmäßigten Strömungsverteilung im Filtrationsbetrieb.

Bei einer weiteren bevorzugten Ausführungsform des erfindungsgemäßen Filterelementes ist vorgesehen, dass das hohlzylindrische Elementmaterial zwischen zwei Endkappen aufgenommen ist, von denen die eine Endkappe als Doppelaufnahme ausgebildet gleichzeitig dem Festlegen des geschlossen scheibenförmig ausgebildeten Elementmaterials am Ende des ringförmigen Elementmaterials dient. Dergestalt lässt sich mittels der Doppelaufnahme das hohlzylindrische Elementmaterial von dem scheibenförmig ausgebildeten Elementmaterial separieren und gegen ein Neu-Elementmaterial jeweils für sich austauschen. Bevorzugt ist jedoch vorgesehen, dass das scheibenförmig ausgebildete Elementmaterial endseitig mit dem hohlzylindrischen Elementmaterial fest verklebt oder verschweißt ist, so dass abstandsfrei die Scheibe in den Hohlzylinder übergeht. Auf diese Art ist eine vergleichmäßigte Anströmung auch im Verbindungsbereich von scheibenförmigem Elementmaterial mit hohlzylindrischem Elementmaterial erreicht und das derart aufgebaute Filterelement lässt sich als Ganzes gegen ein einzelnes Neuelement tauschen.

Für eine bevorzugte Strömungsführung ist dabei ferner vorgesehen, dass die beiden Endkappen jeweils eine Mittenausnehmung aufweisen, deren Durchmesser gleich ist, wobei der Durchmesser der Endkappe mit dem das Filterelement an einen Auslass des Filtergehäuses anschließbar ist, einen Durchmesser aufweist, der dem Innendurchmesser des Hohlzylinders des Filterelementes entspricht. Insbesondere das letztgenannte Merkmal ermöglicht eine widerstandsfreie Abgabe des Filtrats in Richtung des Auslasses der Filtervorrichtung.

Besonders bevorzugt ist, dass geschlossen scheibenförmige Elementmaterial aus einer Filterronde zu bilden, die vom Blattbildner ist, insbesondere von einer auf dem Markt befindlichen Rapid-Köthen Blattbildungsanlage stammt.

Bei einem bevorzugten Verfahren zum Betrieb eines Filterelementes in einer Filtervorrichtung wie vorstehend erläutert, dient das System der Abreinigung von Verschmutzungen, vorzugsweise von Varnish aus einem Fluidstrom, wobei das Filterelement in einem Filtergehäuse aufgenommen wird, mit einem Einlass für Unfiltrat und mit einem Auslass für Filtrat, wobei erfindungsgemäß bei Durchströmung des Filterelementes mit Unfiltrat von außen nach innen sowohl ein hohlzylindrisches Elementmaterial, als auch ein den Hohlzylinder an seinem einen freien Ende abschließendes Elementmaterial durchströmt wird, wobei der Filtratstrom von der Innenseite des Hohlzylinders zum Auslass des Filtergehäuses geführt wird und wobei das jeweilige Elementmaterial für eine allseitige Umströmung von außen nach innen abdichtungsfrei im zugeordneten Filtergehäuse aufgenommen wird. Varnish wird in der Literatur regelmäßig nicht als "harter" Partikel aufgelistet und stellt somit keine eigentliche partikuläre Verschmutzung dar; vielmehr handelt es sich regelmäßig um schlammartige Ölalterungsprodukte.

Die für das Filterelement eingesetzte Cellulose kann in der Art eines Verbundwerkstoffes aufgebaut sein. Dabei kann die Cellulose mit Füllstoffen, Additiven, Filterhilfsmitteln, etc. kombiniert sein.

Als Füllstoffe kommen regelmäßig Silikate, wie beispielsweise Kaolin, Carbonate, wie beispielsweise Kreide; Sulfate, wie beispielsweise Gips, Bariumsulfat; Oxide, wie beispielsweise Titandioxid; Aramidfasern und/oder Carbonfasern zum Einsatz. Als Additive geeignet sind Leimungsmittel, Bindersysteme, Trocken- und Nassverfestiger, Pigmente, Farbstoffe, Entwässerungs- und Retentionsmittel sowie Entschäumer. Als Filterhilfsmittel können Kieselgur, Kieselgel, Perlit, Zeolithe oder Aktivkohle dienen.

Im Folgenden wird die erfindungsgemäße Lösung anhand von Ausführungsbeispielen näher erläutert. Dabei zeigen in prinzipieller und nicht maßstäblicher Darstellung die
- Figur 1: in der Art eines Längsschnittes, die Filtervorrichtung als Ganzes, bestehend aus einem Filtergehäuse und einem aufgenommenen Filterelement;
- Figur 2: das eingesetzte Filterelement mit Pfeilen betreffend das Durchströmverhalten des Filterelementes;
- Figur 3: in detaillierterer Darstellung in der Art eines Längsschnittes durch eine zweite Ausführungsform eines Filterelementes;
- Figur 4: eine Seitendarstellung von außen her auf ein Filterelement vergleichbar nach der Figur 3; und
- Figur 5: eine perspektivische Ansicht auf eine dritte Ausführungsform eines Filterelementes.

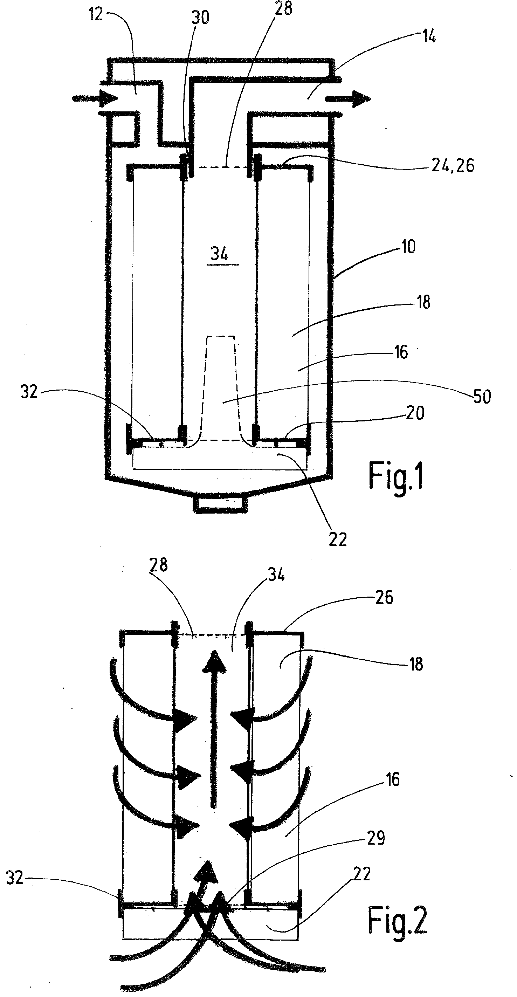

Die Figur 1 zeigt in der Art einer Längsschnittdarstellung in stark vereinfachter Form die erfindungsgemäße Filtervorrichtung als Ganzes. Die Filtervorrichtung weist eine Filtergehäuse 10 auf, das einen Einlass 12 für Unfiltrat und einen Auslass 14 für Filtrat aufweist. In dem Filtergehäuse 10 ist ein tauschbares Filterelement 16 aufgenommen, bei dessen Durchströmung mit Unfiltrat von außen nach innen, gemäß der Darstellung nach der Figur 2, sowohl ein hohlzylindrisches Elementmaterial 18 als auch ein diesen Hohlzylinder 18 an seinem einen freien Ende 20 abschließendes Elementmaterial 22 durchströmt ist. Am anderen freien Ende 24 des Filterelementes 16 respektive des hohlzylindrischen Elementmaterials 18 ist eine Elementkappe 26 vorhanden, mit einer Mittenausnehmung 28, die der Abfuhr von Filtrat dient und an den Auslass 14 des Filtergehäuses 10 angeschlossen ist. Eine entsprechende Mittenausnehmung 29 ist durch das freie Ende des Hohlzylinders 18 gebildet (Fig.2).

Zum Tauschen des Filterelementes 16 ist ein kopfseitiges Gehäuseteil von einem fuß- oder topfseitigen Gehäuseteil mit dem Filterelement 16 zu trennen, was üblich ist, so dass an dieser Stelle hierauf nicht mehr näher eingegangen wird. Die obere Elementkappe 26 ist über einen Stutzen als Teil des Auslasses 14 aufgeschoben und in diesem Bereich über einen Dichtring 30 gehäuseseitig als der alleinigen Dichtung zwischen Element 16 und Gehäuse 10 abgedichtet. Ansonsten ist das jeweilige Elementmaterial 18, 22 für eine allseitige Anströmung von außen nach innen gemäß der Darstellung nach der Figur 2, abdichtungsfrei gemäß der Darstellung nach der Figur 1 im Filtergehäuse 10 aufgenommen. Insbesondere ist keine Abdichtung im bodenseitigen Bereich des Filtergehäuses 10 gegenüberliegend dem abschließenden Elementmaterial 22 vorhanden.

Bei der in den Figuren 1 und 2 gezeigten Ausführungsform eines Filterelementes 16, ist das abschließende Elementmaterial 22 in einer fuß- oder bodenseitigen Endkappe 32 aufgenommen, die als eine Art Doppelaufnahme ausgebildet gleichzeitig dem Festlegen des geschlossen scheibenförmig ausgebildeten Elementmaterials 22 dient, als auch dem Festlegen des hohlzylindrischen Elementmaterials 18. Die Aufnahme von entsprechendem Elementmaterial eines Filterelementes 16 in das Element abschließende Endkappen ist bekannt, so dass an dieser Stelle hierauf nicht mehr näher eingegangen wird. Das Elementmaterial 18, 22 des Filterelementes 16 ist vorzugsweise vollständig aus Zellulosematerial bestehend aufgebaut, also sowohl das hohlzylindrische Elementmaterial 18 als auch das geschlossen ausgebildete abschließende Elementmaterial 22. Der Begriff "geschlossen" im Sinne der Anmeldelösung bedeutet, dass das abschließende Elementmaterial 22 zwar durchgehend porös ausgebildet ist; aber ansonsten keine Fluiddurchlässe aufweist, wie beispielsweise fluidführende Drosseldurchgänge, die die Umgebung mit dem hohlzylindrischen Inneren 34 des Hohlzylinders 18 verbinden könnten. Insoweit wird das Unfiltrat ausschließlich über die Porosität des Elementmaterial 22 für einen Durchgang in den Innenraum 34 des Elementes 16 eingebracht.

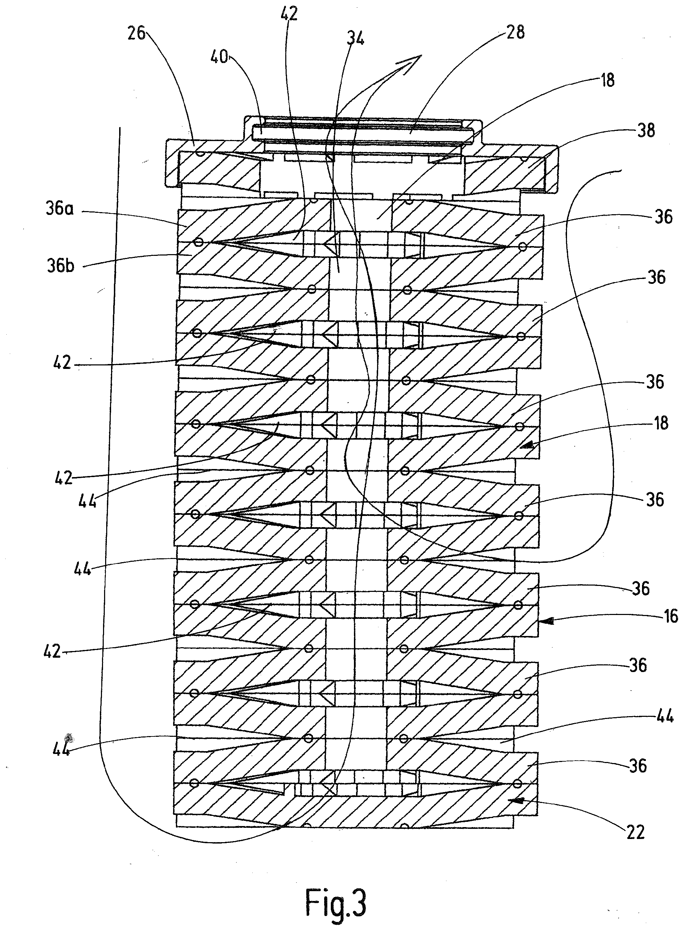

Wie insbesondere die Ausgestaltung nach der Figur 3 zeigt, besteht der Hohlzylinder 18 des Filterelementes 16 aus einzelnen vorzugsweise gleichen ringförmigen Filterscheiben 36, die in Übereinanderanordnung respektive in Stapelabfolge an ihren einander benachbarten Stirnseiten miteinander fest verbunden, vorzugsweise miteinander verklebt sind. Entgegen der Ausführungsform nach der Figur 2 ist in Blickrichtung auf die Figur 3 gesehen, die zuunterst angeordnete Filterscheibe 36 als das das freie Ende des Hohlzylinders 18 abschließende Elementmaterial 22 nicht in einer zusätzlichen Endkappe 32 aufgenommen, sondern vielmehr in der Stapelabfolge direkt mit der zuunterst liegenden Filterscheibe 36 des hohlzylindrischen Elementmaterials 18 fest verbunden, insbesondere fest verklebt oder fest verschweißt. Die ganz zuoberst angeordnete Filterscheibe 38 bildet eine Aufnahmemöglichkeit für die obere Elementkappe 26 mit der Mittenausnehmung 28 aus, deren Begrenzungsrand eine nutförmige Vertiefung 40 aufweist, für die Aufnahme des Dichtringes 30 gemäß der Darstellung nach der Figur 1. Die Elementkappe 26 umgreift außenumfangsseitig den Außenrand der zuoberst liegenden Filterscheibe 38 und ist mit dieser fest verbunden, beispielsweise mittels einer Klebstoffverbindung.

Wie weiter die Figur 3 zeigt, können die einzelnen Filterscheiben 36 auch aus Teilhälften 36a, 36b gebildet sein, die zwischen sich diametral zur Längsachse des Filterelementes 16 gesehen, einander gegenüberliegend gleichgebildete Ausnehmungen 42 aufweisen, die durch kerbartige Einschnitte oder Prägungen in den Filterscheiben 36 gebildet sind oder von zwei Filterscheibenhälften 36a, 36b einer Filterscheibe 36 aneinandergrenzend ausgestaltet sind. Ferner befinden sich in der Stapelabfolge zwischen Filterscheiben 36 entsprechende weitere Ausnehmungen 44, die entsprechend den Ausnehmungen 42 ausgebildet sind. Die jeweilige Ausnehmung 42, 44 läuft damit von einem rechteckförmigen Mittenbereich randseitig sich keilartig verjüngend in die jeweilige Filterscheibe 36 aus, oder in die benachbart angeordneten Scheibenhälften 36, 36b. Die genannten Ausnehmungen 42, 44 in der Art von Einschnitten oder Einprägungen, sind nur an der Oberseite des jeweiligen Elementmaterials 18, 22 angeordnet und greifen nicht in den hohlzylindrischen Innenraum 34 des Filterelementes 16 ein. Die möglichen Durchströmungsrichtungen des Filterelementes 16 sind in der Figur 3 wiederum mit Pfeilen angegeben, wobei für die zuunterst liegende Filterscheibe 36 in der Stapelabfolge eine Durchströmung von der Bodenseite aus in Richtung des Innenraumes 34 des Filterelementes 16 erfolgt.

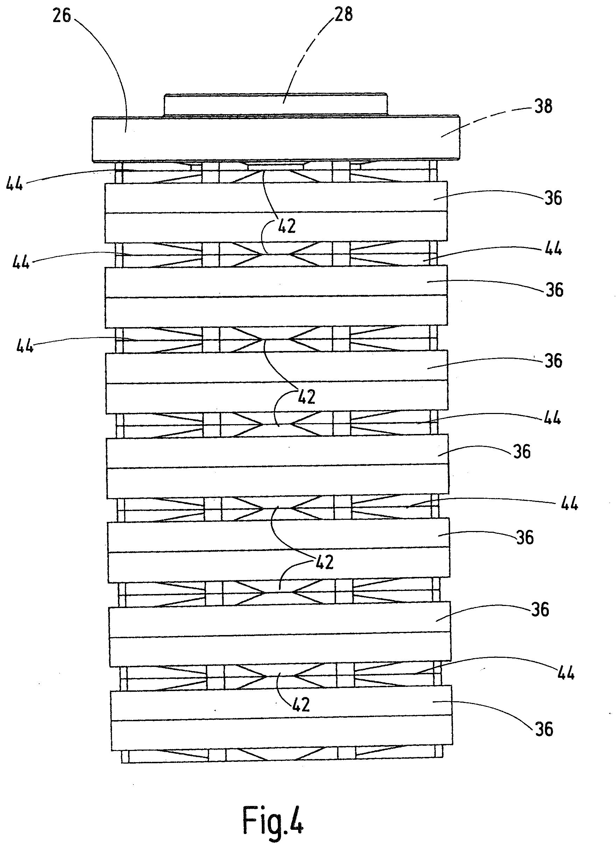

Bei der insoweit abgeänderten Ausführungsform nach der Figur 4, sind die Ausnehmungen 42, 44 durch entsprechende umfangsseitige Einprägungen oder Einschnitte gebildet, wobei in jedem Fall die Ausnehmungen 42,44 die Stabilität des Zelluloseelementes als Ganzes aussteifen und einer verbesserten Strömungsführung für den Unfiltratstrom von außen ins Innere 34 des Filterelementes 16 dienen. In jedem Fall sind in jeder Filterscheibe 36 oder zwischen Scheibenhälften 36a, 36b einer Filterscheibe 36 jeweils vier in einer gemeinsamen Radialebene liegende Ausnehmungen 42, 44 vorhanden. Insbesondere ist das bis auf seine Porosität geschlossen ausgebildete, scheibenförmige Elementmaterial 22 aus einer Filterronde gebildet, das vom Blattbildner stammt.

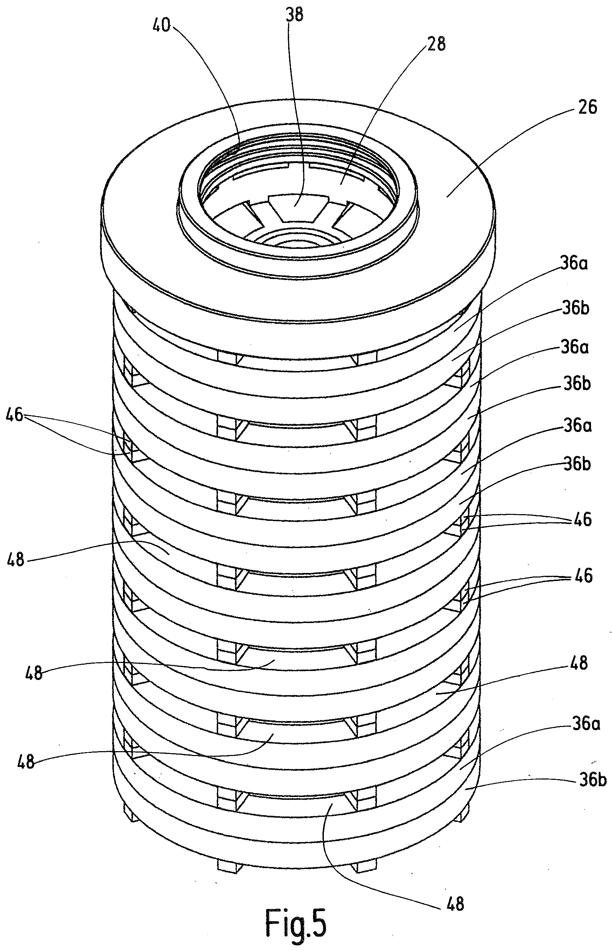

Bei der Ausführungsform nach der Figur 5 weisen die einzelnen Scheibenhälften 36a, 36b einzelne Filterscheiben bildend einander zugewandt radial verlaufende Begrenzungsstäbe als Abstandhalter 46 auf, die Ausnehmungen 48 zwischen sich begrenzen, die wiederum einer verbesserten Fluidführung dienen, aber wiederum nicht vollständig das filternde Material durchgreifen, vergleichbar den Ausnehmungen 42, 44 nach den vorangehend beschriebenen Ausführungsformen.

Wie des Weiteren die Figur 1 in strichlinierter Weise zeigt, kann der Innenraum 34 zusätzlich im Bedarfsfall auch eine Strömungsleit- oder Einleiteinrichtung 50 aufweisen, die für eine verbesserte Strömungsführung im Inneren des Filterelementes 16 eine Trompetenform aufweist, deren größter Querschnitt einstückig in das Elementmaterial der geschlossenen unteren Filterscheibe 36 übergeht.

Die erfindungsgemäße Lösung dient insbesondere dem Entfernen von sogenanntem Varnish aus einem Fluidstrom, regelmäßig gebildet aus Ölalterungsprodukten, die in der Literatur nicht als "harter Partikel" aufgelistet sind und demgemäß keine partikuläre Verschmutzung im eigentlichen Sinne darstellt. Die Anwendung betrifft ferner die Entwässerung, insbesondere hat Zellulose die Eigenschaft Wasser aufnehmen zu können. Dergestalt lässt sich auch eine Öl-Wasser-Trennung erreichen. Abschließend besteht auch die Möglichkeit einer partikulären Filtration.

## Patentansprüche

1. Filtervorrichtung mit einem Filtergehäuse (10), das einen Einlass (12) für Unfiltrat und einen Auslass (14) für Filtrat aufweist und das ein tauschbares Filterelement (16) aufnimmt, bei dessen Durchströmung mit Unfiltrat von außen nach innen sowohl ein hohlzylindrisches Elementmaterial (18) als auch ein den Hohlzylinder (18) an seinem einen freien Ende (20) abschließendes Elementmaterial (22) durchströmt ist, an dessen anderem freien Ende (24) eine Elementkappe (26) mit einer Mittenausnehmung (28) dazu dient, Filtrat an den Auslass (14) im Filtergehäuse (10) abzugeben, der an die Mittenausnehmung (28) angeschlossen ist und dass das jeweilige Elementmaterial (18, 22) für eine allseitige Anströmung von außen nach innen abdichtungsfrei im Filtergehäuse (10) aufgenommen ist.

2. Filterelement, insbesondere für eine Filtervorrichtung nach Anspruch 1 vorgesehen, mit einem hohlzylindrischen Elementmaterial (18), das auf seiner einen freien Stirnseite (20) mit einem den Hohlzylinder (18) abschließenden Elementmaterial (22) versehen ist, **dadurch gekennzeichnet, dass** das jeweilige Elementmaterial (18, 22) zumindest teilweise, vorzugsweise vollständig, aus Zellulosematerial besteht.

3. Filterelement nach Anspruch 2, **dadurch gekennzeichnet, dass** der Hohlzylinder (18) des Filterelementes (16) aus einzelnen, vorzugsweise gleichen, ringförmigen Filterscheiben (36) gebildet ist, die in Übereinanderanordnung an ihren einander benachbarten Stirnseiten miteinander fest verbunden, vorzugsweise miteinander verklebt sind und dass das den Hohlzylinder (18) an seinem einen Ende abschließende Elementmaterial (22) aus einer geschlossenen Filterscheibe (36) gebildet ist.

4. Filterelement nach Anspruch 2 oder 3, **dadurch gekennzeichnet, dass** alle Filterscheiben (36) aus Zellulosematerial dieselben Filtereigenschaften aufweisen, insbesondere dieselbe Filterfeinheit und dass die ringförmigen Filterscheiben (36) von ihrem Elementmaterial her, alle gleich aufgebaut sind.

5. Filterelement nach einem der Ansprüche 2 bis 4, **dadurch gekennzeichnet, dass** die einzelnen ringförmigen Filterscheiben (36) außenumfangsseitig Ausnehmungen (42, 44, 48) aufweisen, die durch Einschnitte, Einprägungen oder durch benachbarte Abstandhalter (46) zwischen den Filterscheiben (36a, 36b) gebildet sind.

6. Filterelement nach einem der Ansprüche 2 bis 5, **dadurch gekennzeichnet, dass** das scheibenförmige Elementmaterial (22) mit einer Zusatzgeometrie versehen ist, vorzugsweise in Form einer Einleiteinrichtung (50), die in das Innere (14) des Hohlzylinders (18) eingreift.

7. Filterelement nach einem der Ansprüche 2 bis 6, **dadurch gekennzeichnet, dass** die Einleiteinrichtung (50) vom Außenumfang her eine Trompetenform aufweist, deren größter Querschnitt einstückig in das Elementmaterial (22) der geschlossenen Filterscheibe (36) übergeht.

8. Filterelement nach einem der vorstehenden Ansprüche 2 bis 7, **dadurch gekennzeichnet, dass** das hohlzylindrische Elementmaterial (18) zwischen zwei Endkappen (26, 32) aufgenommen ist, von denen die eine Endkappe (32) als Doppelaufnahme ausgebildet gleichzeitig dem Festlegen des geschlossen scheibenförmig ausgebildeten Elementmaterials (22) am Ende des ringförmigen Elementmaterials (18) dient.

9. Filterelement nach einem der Ansprüche 2 bis 8, **dadurch gekennzeichnet, dass** die beiden Endkappen (26, 32) jeweils eine Mittenausnehmung (28, 29) aufweisen, deren Durchmesser gleich ist und dass der Durchmesser der Endkappe (26) mit dem das Filterelement (16) an einen Auslass (14) des Filtergehäuses (10) anschließbar ist, einen Durchmesser aufweist, der im Wesentlichen dem Innendurchmesser des Hohlzylinders (18) des Filterelementes (16) entspricht.

10. Filterelement nach einem der Ansprüche 2 bis 9, **dadurch gekennzeichnet, dass** das geschlossen scheibenförmige Elementmaterial (22) aus einer Filterronde gebildet ist.

11. Filterelement nach einem der Ansprüche 2 bis 10, **dadurch gekennzeichnet, dass** die Filterronde vom Blattbildner ist.

12. Verfahren zum Betrieb eines Filterelementes nach einem der Ansprüche 2 bis 11 in einer Filtervorrichtung nach Anspruch 1, das dem Abreinigen von Verschmutzungen, vorzugsweise von Varnish, aus einem Fluidstrom dient und das in einem Filtergehäuse (10) aufgenommen wird, mit einem Einlass (12) für Unfiltrat und mit einem Auslass (14) für Filtrat, **dadurch gekennzeichnet, dass** bei Durchströmung des Filterelementes (16) mit Unfiltrat von außen nach innen, sowohl ein hohlzylindrisches Elementmaterial (18) als auch ein den Hohlzylinder an seinem einen freien Ende abschließendes Elementmaterial (22) durchströmt wird, dass der Filtratstrom von der Innenseite (14) des Hohlzylinders (18) zum Auslass (14) des Filtergehäuses (10) geführt wird, und dass das jeweilige Elementmaterial (18, 22) für eine allseitige Umströmung von außen nach innen abdichtungsfrei im Filtergehäuse (10) aufgenommen wird.
